# EUROPÄISCHE PATENTSCHRIFT

(11) **EP 0 419 715 B1**
(45) Veröffentlichungstag und Bekanntmachung des Hinweises auf die Patenterteilung: **23.06.1993**
(21) Anmeldenummer: 89118007.7
(22) Anmeldetag: 28.09.1989
(51) Int. Cl.: F16N 7/38

(54) **Schmiermittelfördereinrichtung**
Lubricant supply device
Dispositif d'alimentation de lubrifiant

(43) Veröffentlichungstag der Anmeldung: 03.04.1991
(73) Patentinhaber: HYDAC TECHNOLOGY GMBH, D-66280 Sulzbach (DE)
(72) Erfinder: Scheuber, Harald R., Dipl.-Ing., D-6823-Neulussheim (DE)
(74) Vertreter: Patentanwälte Bartels und Partner

(56) Entgegenhaltungen:
- EP-A- 0 159 580
- EP-A- 0 284 866
- DE-U- 8 815 628

## Beschreibung

Die Erfindung betrifft eine Schmiermittelfördereinrichtung, welche die Merkmale des Oberbegriffs des Anspruches 1 aufweist, für die Schmiermittelversorgung wenigstens eines Dosierventils in einer statischen oder dynamischen Ein- oder Mehrleitungsanlage, wie sie aus der DE-U-8 815 628 bekannt ist.

Bei den bekannten Anlagen dieser Art ist in der Hauptleitung, also dem zwischen dem Dosierventil oder den Dosierventilen einerseits und dem Druck- und Entlastungsventil der Schmiermittelfördereinrichtung andererseits liegenden Abschnitt der Schmiermittelleitung ein Filter angeordnet. Hierdurch läßt sich zwar verhindern, daß Schmutz in die Dosierventile und an die Schmierstellen gelangt. Je mehr sich aber im Laufe der Zeit das Filter mit Schmutz zusetzt, desto stärker wird die ordnungsgemäße Arbeitsweise der Dosierventile beeinträchtigt, was zur Folge hat, daß die von den Dosierventilen abgegebene Schmiermittelmenge eine erhebliche Streuung zur Nenndosiermenge haben oder die Dosierventile funktionsunfähig werden.

Der Erfindung liegt die Aufgabe zugrunde, die bekannten statitischen und dynamischen Ein- und Mehrleitungsanlagen dahingehend zu verbessern, daß eine einwandfreie Arbeitsweise jedes vorhandenen Dosierventils sichergestellt ist. Diese Aufgabe wird erfindungsgemäß mit einer Schmiermittelfördereinrichtung gelöst, welche die Merkmale des Anspruches 1 aufweist.

Das dem Druck- und Entlastungsventil parallelgeschaltete, entsperrbare Rückschlagventil befindet sich in seinem gesperrten Zustand, solange die Pumpe arbeitet. Die Schmiermittelförderung zum Dosierventil wird deshalb durch das entsperrbare Rückschlagventil nicht beeinträchtigt. Wenn jedoch die Pumpe abgeschaltet wird, wird das Rückschlagventil unverzüglich entsperrt, und diese Entsperrung führt zu einer Schnellschaltung des Druck-und Entlastungsventils.

Die Ansteuerleitung des entsperrbaren Rückschlagventils ist an denjenigen Abschnitt der Förderleitung angeschlossen, in dem der Druck im Anschluß an das Abschalten der Pumpe langsamer fällt. Sind die Druckverhältnisse wechselnd, also nicht voraussehbar, in welchem der beiden Abschnitte der Förderleitung der Druck nach dem Abschalten der Pumpe langsamer abfällt, wird bei einer bevorzugten Ausführungsform die Ansteuerleitung des entsperrbaren Rückschlagventils an den Mittelanschluß eines Wechselventils angeschlossen, das parallel zum entsperrbaren Rückschlagventil und dem Druck- und Entlastungsventil liegt und, abhängig von den Druckverhältnissen in der einen oder anderen Richtung zu sperren vermag.

Die einwandfreie Arbeitsweise jedes vorhandenen Dosierventils kann dadurch noch unterstützt werden, daß man in der Förderleitung zwischen der Pumpe und dem Druck- und Entlastungsventil ein auswechselbares Filter anordnet. Man kann dann nämlich auf das üblicherweise in der Hauptleitung vorhandene Filter verzichten. Das vor dem Druck- und Entlastungsventil angeordnete Filter verhindert, daß sein Zustand, also der Grad, in dem es durch Schmutzpartikel zugesetzt ist, Einfluß auf den am Ausgang des Druck- und Entlastungsventils herrschenden Druck hat. Mit zunehmder Verschmutzung wird nur der Strömungswiderstand des Filters in der Förderleitung zwischen der Pumpe und dem Druck- und Entlastungsventil erhöht, was bis zu einem gewissen Ausmaße die ordnungsgemäße Funktion der Schmiermittelfördereinrichtung nicht beeinträchtigt. Weitere vorteilhafte Ausgestaltungen der erfindungsgemäßen Lösung sind Gegenstand der Ansprüche 5 bis 7.

Vor allem bei zähflüssigem Öl oder Fließfett kann es vorteilhaft sein, zum Zwecke der Schnellentlastung des Dosierventils oder der Dosierventile zusätzlich eine Umschaltbarkeit der Pumpe von Pumpbetrieb auf Saugbetrieb und umgekehrt vorzusehen. Zum Zwecke der Schnellentlastung braucht dann nur kurzzeitig die Pumpe auf Saugbetrieb umgeschaltet zu werden, wobei nur die Drehrichtung des Antriebsmotors geändert zu werden braucht, was automatisch von einer Steuereinrichtung aus erfolgen kann. Um während des Saugbetriebs der Pumpe zu verhindern, daß das Schmiermittel in Richtung gegen die Pumpe hin das Filter durchströmt, ist bei einer bevorzugten Ausführungsform ein das Filter überbrückendes und in Richtung von der Pumpe zum Dosierventilanschluß sperrendes Rückschlagventil vorgesehen. Der Anschluß dieses Rückschlagventils an die Förderleitung ist vorzugsweise gemäß den Ansprüchen 9 und 10 ausgeführt.

Im folgenden ist die Erfindung anhand von zwei in der Zeichnung dargestellten Ausführungsbeispielen im einzelnen erläutert. Es zeigen
Fig. 1 ein Schaltbild des ersten Ausführungsbeispiels,
Fig. 2 ein Schaltbild des zweiten Ausführungsbeispiels.

Eine Schmiermittelfördereinrichtung für die Schmiermittelversorgung wenigstens eines Dosierventils in einer statischen oder dynamischen Ein- oder Mehrleitungsanlage weist ein Gehäuse 1 auf, in dem sämtliche nachfolgend erwähnten Bauteile enthalten sind. Zu einem Schmiermittel-Vorratsbehälter 2 führt eine Einfülleitung 3, deren dem Vorratsbehälter 2 abgekehrtes Ende an einen in der Gehäusewand angeordneten Einfüllstutzen 4 angeschlossen ist, der von außen her mittels eines manuell betätigbaren Verschlußdeckels verschließbar ist und geöffnet werden kann. Eine Pumpe 5, die von einem Elektromotor 6 antreibbar ist, fördert Schmiermittel aus dem Vorratsbehälter 2 heraus in eine Förderleitung 7, die zu einer Anschlußvorrichtung 8 für die Hauptleitung der Anlage führt.

In der Förderleitung 7 ist auswechselbar ein Schmiermittelfilter 9 angeordnet. Das Gehäuse 1 weist für die Aufnahme des Filters 9 eine von außen her zugängliche, zylindrische Aufnahme auf, die mittels eines Schraubdeckels dicht verschließbar ist. Die Längsachse der Aufnahme ist in das Gehäuse 1 hinein nach unten geneigt, wodurch ein Austritt von Schmiermittel beim Wechseln des Filters 9 vermieden wird. Für einen Filterwechsel oder eine Filterreinigung brauchen nur der Schraubdeckel abgenommen und das Filter 9 aus dem am Grund der Aufnahme vorgesehenen Innengewinde herausgedreht zu werden. Ein Filterwechsel nimmt deshalb nur wenig Zeit in Anspruch, so daß er während einer Pausenzeit ohne eine Abschaltung der Schmieranlage problemlos möglich ist.

Ein geneigt verlaufender Bereich der Wand des Gehäuses 1, an den sich die Aufnahme anschließt, weist im Abstand neben der Aufnahme den Einfüllstutzen 4 auf, der eine Form wie die Aufnahme hat. Das Einfüllen des Schmiermittels ist deshalb problemlos möglich.

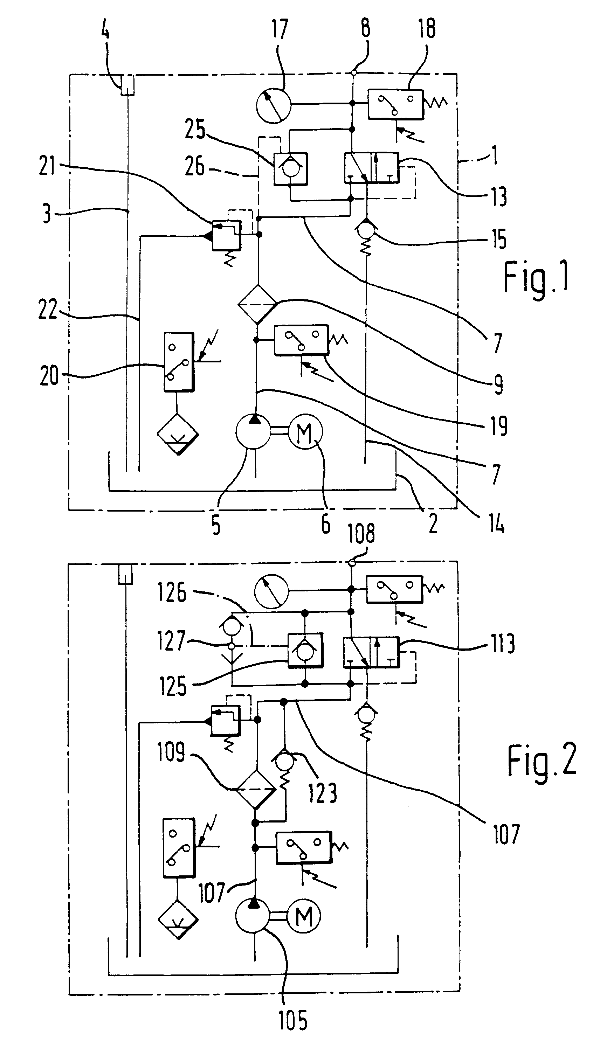

Wie Fig.1 zeigt, führt die Förderleitung 7 von der Austrittseite des Filters 9 zu einem Druck- und Entlastungsventil 13, mittels dessen in bekannter Weise der für die ordnungsgemäße Arbeitsweise der Dosierventile in der nicht dargestellten Anlage der Wechsel zwischen Intervallen, in denen der Schmiermitteldruck an den Dosierventilen anliegt, und Intervallen bewirkt wird, in denen die zu den Dosierventilen führende Hauptleitung druckentlastet ist. Für diese Druckentlastung führt vom Druck- und Entlastungsventil 13 eine Entlastungsleitung 14 zum Vorratsbehälter 2, in der ein Überdruckventil 15 liegt, das ab einem Mindestwert des Druckes den Durchfluß durch die Entlastungsleitung 14 zum Vorratsbehälter 2 freigibt.

Vom Druck- und Entlastungsventil 13 führt die Förderleitung 7 zu der Anschlußvorrichtung 8 für die Hauptleitung. In dem letztgenannten Abschnitt sind an die Förderleitung 7 ein Manometer 17 sowie ein erster Drucksensor 18 angeschlossen. Das Manometer 17 ist neben dem Schraubdeckel im Bereich des Gehäuses 1 angeordnet. Der erste Drucksensor 18, der ein dem Druck in der Förderleitung 7 entsprechendes elektrisches Signal erzeugt, ist an eine nicht dargestellte Differenzdruck-Überwachungseinrichtung angeschlossen. Mit dieser Einrichtung ist auch der Signalausgang eines zweiten Drucksensors 19 verbunden, der wie der erste Drucksensor 18 ausgebildet ist, aber an die Förderleitung 7 zwischen der Pumpe 5 und dem Filter 9 angeschlossen ist. Mittels der beiden Drucksensoren 18 und 19 sowie der Differenzdruck-Überwachungseinrichtung wird der Druckabfall am Filter 9 ermittelt. Hat dieser Druckabfall einen Wert erreicht, der einen Filteraustausch oder ein Reinigen des Filters 9 erforderlich macht, dann wird dies durch ein entsprechendes Signal der Differenzdruck-Überwachungseinrichtung angezeigt. Bei einer der nächsten Pausenzeiten kann dann der Filteraustausch oder die Filterreinigung vorgenommen werden, ohne daß die Schmieranlage abgeschaltet werden müßte.

Ein Niveausensor 20 kontrolliert das Schmiermittelniveau im Vorratsbehälter 2 und löst ein Signal aus, sobald das Niveau einen unteren Grenzwert unterschreitet, damit rechtzeitig Schmiermittel in den Einfüllstutzen 4 eingeleitet werden kann. Ferner ist aus Sicherheitsgründen ein Überdruckventil 21 vorgesehen, das in einer Rücklaufleitung 22 liegt, die an die Förderleitung 7 zwischen dem Filter 9 und dem Druck- und Entlastungsventil 13 angeschlossen ist und zum Vorratsbehälter 2 führt.

Wie Fig.1 zeigt, ist parallel zum Druck- und Entlastungsventil 13 ein entsperrbares Rückschlagventil 25 an die Förderleitung 7 angeschlossen, und zwar unmittelbar vor und nach dem Druck- und Entlastungsventil 13. Das Rückschlagventil 25 sperrt einen Durchfluß von dem von der Pumpe 5 zum Druck- und Entlastungsventil 13 verlaufenden Abschnitt der Förderleitung 7 zu dem zwischen dem Druck- und Entlastungsventil 13 sowie dem Anschluß 8 verlaufenden Abschnittes der Förderleitung 7. Ferner ist der Entriegelungsdruck des Rückschlagventils 25 größer als der Durchflußdruckverlust des Druck- und Entlastungsventils 13. Die Ansteuerleitung 26 des entsperrbaren Rückschlagventils 25 ist an die Förderleitung 7 zwischen dem Druck- und Entlastungsventil 13 sowie dem Filter 9 angeschlossen, weil im Anschluß an das Abschalten der Pumpe 5 der Druck in diesem Abschnitt der Förderleitung 7 langsamer absinkt als im Abschnitt zwischen dem Druck- und Entlastungsventil 13 sowie dem Anschluß 8. Würde im letztgenannten Abschnitt der Förderleitung 7 beim Abschalten der Pumpe 5 der Druck langsamer absinken als in dem von der Pumpe 5 zum Druck- und Entlastungsventil 13 führenden Abschnitt, dann wäre die Ansteuerleitung 26 an den zwischen dem Druck- und Entlastungsventil 13 sowie dem Anschluß 8 liegenden Abschnitt der Förderleitung 7 anzuschließen.

Solange die Pumpe 5 arbeitet, ist das entsperrbare Rückschlagventil 25 gesperrt. Sobald jedoch die Pumpe 25 abgeschaltet wird, wird das Rückschlagventil 25 entsperrt, was zu einer Schnellschaltung des Druck- und Entlastungsventils 13 führt, wodurch wiederum die Förderleitung 7 schnell entlastet wird.

Das zweite Ausführungsbeispiel unterscheidet sich von dem ersten Ausführungsbeispiel nur durch eine andere Ansteuerung des entsperrbaren Rückschlagventils 125. Im folgenden ist deshalb das zweite Ausführungsbeispiel nur insoweit erläutert, als es sich vom ersten Ausführungsbeispiel unterscheidet. Wegen der übrigen Einzelheiten wird auf die Ausführungen zum ersten Ausführungsbeispiel Bezug genommen. Außerdem sind sich entsprechende Teile mit um 100 größeren Bezugszahlen gekennzeichnet.

Parallel zum entsperrbaren Rückschlagventil 125 und damit auch parallel zum Druck- und Entlastungsventil 113 liegt ein Wechselventil 127, das abhängig von den Druckverhältnissen am Eingang und am Ausgang des entsperrbaren Rückschlagventils 125 den Durchfluß in der einen oder anderen Richtung zu sperren vermag. Die Ansteuerleitung 126 des Rückschlagventils 125 ist an den Mittelanschluß des Wechselventils 127 angeschlossen. Dank dieses Anschlusses der Ansteuerleitung 126 des Rückschlagventils 125 wird letzteres beim Abschalten der Pumpe 105 unverzüglich entsperrt, unabhängig davon, in welchem der beiden Abschnitte der Förderleitung 107 der Druck langsamer absinkt. Daher ist auch bei wechselnden Druckverhältnissen sichergestellt, daß beim Abschalten der Pumpe 105 eine Schnellschaltung des Druck- und Entlastungsventils 113 ausgelöst wird.

## Patentansprüche

1. Schmiermittelfördereinrichtung für die Schmiermittelversorgung wenigstens eines Dosierventils in einer statischen oder dynamischen Ein- oder Mehrleitungsanlage, mit einem Schmiermittel-Versorgungsbehälter (2), einer von einem Motor (6) angetriebenen, aus dem Vorratsbehälter (2) Schmiermittel in eine Förderleitung (7) überführende Pumpe (5) und einem Druck- und Entlastungsventil (13), das in der von der Pumpe (5) zu einem Anschluß (8) für wenigstens ein Dosierventil führenden Förderleitung (7) liegt und während der Entlastungsintervalle diese Leitung mit einer zum Schmiermittel-Vorratsbehälter (2) führenden Entlastungsleitung (14) verbindet, dadurch gekennzeichnet, daß parallel zum Druck- und Entlastungsventil (13) ein entsperrbares Rückschlagventil (25) an die Förderleitung (7) angeschlossen ist, dessen Entriegelungsdruck größer ist als der Durchflußdruckverlust des Druck- und Entlastungsventils (13).

2. Einrichtung nach Anspruch 1, dadurch gekennzeichnet, daß die Ansteuerleitung (26) des entsperrbaren Rückschlagventils (25) mit der Förderleitung (7) zwischen der Pumpe (5) und dem Druck- und Entlastungsventil (13) oder zwischen letzterem und dem Anschluß (8) verbunden ist, je nachdem, ob im Anschluß an ein Abschalten der Pumpe (5) der Druck im Abschnitt der Förderleitung (7) zwischen der Pumpe (5) und dem Druck- und Entlastungsventil (13) langsamer als im Abschnitt zwischen letzterem und dem Anschluß (8) oder im letztgenannten Abschnitt langsamer als im erstgenannten Abschnitt fällt.

3. Einrichtung nach Anspruch 1, dadurch gekennzeichnet, daß die Ansteuerleitung (126) des entsperrbaren Rückschlagventils (125) an den Mittelanschluß eines Wechselventils (127) angeschlossen ist, welches wie das entsperrbare Rückschlagventil (125) parallel zum Druck- und Entlastungsventil (113) an die Förderleitung (107) angeschlossen ist.

4. Einrichtung nach einem der Ansprüche 1 bis 3, dadurch gekennzeichnet, daß in der Förderleitung (7; 107) zwischen der Pumpe (5; 105) und dem Druck- und Entlastungsventil (13; 113) ein auswechselbares Filter (9; 109) angeordnet ist.

5. Einrichtung nach Anspruch 4, dadurch gekennzeichnet, daß zwischen dem Filter (9) und dem Dosierventil-Anschluß (8), vorzugsweise zwischen letzterem und dem Druck- und Entlastungsventil (13), ein erster Drucksensor (18) und zwischen der Pumpe (5; 105) und dem Filter (9; 109) ein zweiter Drucksensor (19) an die Förderleitung (7; 107) angeschlossen sind und daß der Signalausgang der beiden Drucksensoren (18, 19) mit einer Differenzdruck-Überwachungseinrichtung verbunden ist.

6. Einrichtung nach Anspruch 5, dadurch gekennzeichnet, daß an denjenigen Abschnitt der Förderleitung (7; 107), an den der erste Drucksensor (18) angeschlossen ist, auch ein Manometer (17) mit ablesbarer Anzeige anschlossen ist.

7. Einrichtung nach einem der Ansprüche 4 bis 6, gekennzeichnet durch ein Überdruckventil (21), das in geöffnetem Zustand den zwischen dem Filter (9) und dem Druck- und Entlastungsventil (13; 113) liegenden Abschnitt der Förderleitung (7; 107) mit einer zum Schmiermittel-Vorratsbehälter (2) führenden Rücklaufleitung (22) verbindet.

8. Einrichtung nach einem der Ansprüche 4 bis 7, dadurch gekennzeichnet, daß die Pumpe (105) von Pumpbetrieb auf Saugbetrieb und umgekehrt umschaltbar ist und ein das Filter (109) überbrückendes, in Richtung von der Pumpe (105) zum Anschluß (108) sperrendes Rückschlagventil (123) vorgesehen ist.

## Claims

1. Lubricant feed device for supplying lubricant to at least one dosing valve in a static or dynamic single- or multi-line installation, with a lubricant supply container (2), a pump (5) driven by a motor (6), transferring lubricant from the storage container (2) to a feed line (7) and a pressure and relief valve (13), which is located in the feed line (7) leading from the pump (5) to a connection (8) for at least one dosing valve and which during the relief periods connects this line to a discharge line (14) leading to the lubricant storage container (2), characterised in that parallel to the pressure and relief valve (13), a releasable non-return valve (25) is connected to the feed line (7), the releasing pressure of which is greater than the throughflow pressure loss of the pressure and relief valve (13).

2. Device according to Claim 1, characterised in that the control line (26) of the releasable non-return valve (25) is connected to the feed line (7) between the pump (5) and the pressure and relief valve (13) or between the latter and the connection (8), depending on whether, subsequent to stopping of the pump (5), the pressure in the section of the feed line (7) between the pump (5) and the pressure and relief valve (13) drops more slowly than in the section between the latter and the connection (8) or in the last-mentioned section more slowly than in the first-mentioned section.

3. Device according to Claim 1, characterised in that the control line (126) of the releasable non-return valve (125) is connected to the central connection of a change-over valve (127), which like the releasable non-return valve (125), is connected to the feed line (107) parallel to the pressure and relief valve (113).

4. Device according to one of Claims 1 to 3, characterised in that an exchangeable filter (9; 109) is located in the feed line (7; 107) between the pump (5; 105) and the pressure and relief valve (13; 113).

5. Device according to Claim 4, characterised in that located between the filter (9) and the dosing valve connection (8), preferably between the latter and the pressure and relief valve (13) is a first pressure sensor (18) and between the pump (5; 105) and the filter (9; 109), a second pressure sensor (19) is connected to the feed line (7; 107) and that the signal output of the two pressure sensors (18, 19) is connected to a pressure difference monitoring device.

6. Device according to Claim 5, characterised in that a pressure gauge (17) with a readable display is also connected to that section of the feed line (7; 107), to which the first pressure sensor (18) is connected.

7. Device according to one of Claims 4 to 6, characterised by an excess pressure valve (21), which in the open state connects the section of the feed line (7; 107) located between the filter (9) and the pressure and relief valve (13; 113), to a return line (22) leading to the lubricant storage container (2).

8. Device according to one of Claims 4 to 7, characterised in that the pump (105) can be switched from pumping operation to suction operation and vice versa and a non-return valve (123) is provided, bypassing the filter (109) and closing the line in the direction from the pump (105) to the connection (108).

## Revendications

1. Dispositif d'alimentation de lubrifiant pour alimenter en lubrifiant, au moins, une valve de dosage dans une installation statique ou dynamique comportant un ou plusieurs circuits de conduits, qui comprend un réservoir d'alimentation de lubrifiant (2), une pompe (5) entraînée par un moteur (6), qui refoule le lubrifiant, contenu dans un réservoir (2), dans un conduit d'alimentation (7) et une valve de pression et de décompression (13) située dans un conduit d'alimentation (7) reliant la pompe (5) au raccord (8) d'un conduit d'alimentation (7) aboutissant à, au moins, une valve de dosage, cependant que l'intervalle de décharge relie ce conduit à un conduit de décharge (14) conduisant à un réservoir de lubrifiant (2), caractérisé en ce que, parallèlement à la valve de pression et de décompression (25) une valve de retenue déblocable (25) est connectée au conduit d'alimentation (7), valve dont la pression de déblocage est supérieure à la chute de pression de circulation ou de passage de la valve de pression et de décompression (13).

2. Dispositif selon la revendication 1, caractérisé en ce que le conduit de commande (26) de la valve de retenue déblocable (25) est reliée au conduit d'alimentation (7) entre la pompe (5) et la valve de pression et de décompression (13) ou entre cette dernière et le point de raccordement (8) selon que, lorsqu'on arrête la pompe (5), la pression dans la section du conduit d'alimentation (7) comprise entre la pompe (5) et la valve de pression et de décompression (13) décroît plus lentement que dans la section comprise entre cette dernière et le point de raccordement (8) ou dans la dernière section mentionnée plus lentement que dans la première section mentionnée.

3. Dispositif selon la revendication 1, caractérisé en ce que le conduit de commande (128) de la valve de retenue déblocable (125) est relié au raccord central d'une valve de commutation (127) qui, comme la valve de retenue déblocable (125), est relié au conduit d'alimentation, parallèlement à la valve de pression et de décompression (113).

4. Dispositif selon l'une quelconque des revendications 1 à 3, caractérisé en ce que le conduit d'alimentation (7; 107) comporte, entre la pompe (5; 105) et la valve de pression et de décompression (13; 113), un filtre remplaçable (9; 109).

5. Dispositif selon la revendication 4, caractérisé en ce que, entre le filtre (9) et le raccord (8) de la valve de dosage, de préférence, entre cette dernière et la valve de pression et de décompression (13) est monté un premier senseur ou capteur de pression (18), tandis que, entre la pompe (5; 105) et le filtre (9; 109) est monté un second senseur ou capteur de pression (19) sur le conduit d'alimentation (7; 107), et en ce que la sortie des signaux des deux senseurs de pressions (18, 19) est connectée à un dispositif de surveillance des différences de pressions.

6. Dispositif selon la revendication 5, caractérisé en ce que, à la section du conduit d'alimentation (7; 107) à laquelle est connecté le premier senseur de pression (18) est également relié à un manomètre (17) dont les indications sont lisibles.

7. Dispositif selon l'une quelconque des revendications 4 à 6, caractérisé par une valve de surpression (21) qui, ouverte, relie la section du conduit d'alimentation (7; 107) comprise entre le filtre (9) et la valve de pression et de décompression (13; 113) du conduit d'alimentation (7; 107) avec un conduit de retour (22) aboutissant au réservoir de lubrifiant (2).

8. Dispositif selon l'une quelconque des revendications 4 à 7, caractérisé en ce que la pompe (105) peut être commutée entre les régimes d'aspiration et de refoulement et inversement et en ce qu'une valve de retenue (123) bloquant la circulation dans la direction comprise entre le raccord (123) et la pompe (105) ponte le filtre (109).
